# EUROPÄISCHE PATENTSCHRIFT

(11) **EP 0 389 764 B1**
(45) Veröffentlichungstag und Bekanntmachung des Hinweises auf die Patenterteilung: **05.05.1993**
(21) Anmeldenummer: 90102561.9
(22) Anmeldetag: 09.02.1990
(51) Int. Cl.: A47F 5/10, E04H 1/12, F16B 5/06

(54) **Ständerelement insbesondere für Ausstellungs-, Messestände od. dgl.**
Support element especially for display, fair stands and the like
Elément de support notamment pour stands d'exhibition, foire et semblables

(30) Priorität: 25.03.1989 DE 3909908
(43) Veröffentlichungstag der Anmeldung: 03.10.1990
(73) Patentinhaber: Connec AG Systembau-Technik, CH-6300 Zug (CH)
(72) Erfinder: Swoboda, Hellmuth, CH-4456 Tenniken (CH)
(74) Vertreter: Patent- und Rechtsanwaltssozietät, Schmitt, Maucher & Börjes

(56) Entgegenhaltungen:
- EP-A- 0 255 884
- AU-B- 63 263
- DE-A- 2 730 905
- DE-A- 3 513 000
- FR-A- 1 505 531
- GB-A- 2 204 086
- US-A- 4 610 560

## Beschreibung

Die Erfindung betrifft ein Ständerelement gemäß dem Oberbegriff des Patentanspruches 1.

Ein derartiges Ständerelement ist aus der DE-A-27 30 905 bekannt. Dabei sind die jeweiligen Scharniere als Bänder ausgebildet, die in in Längsrichtung verlaufenden Profilnuten eingeklemmt sind, also zum Einfügen und demgemäß auch zum Entfernen in Längsrichtung dieser Profile und der Wandteile herausgezogen werden müßten. Bei diesem Ständerelement ist deshalb vorgesehen, daß ein Scharnier in Längsrichtung herausgezogen werden kann, um die drei Wandteile übereinanderklappen zu können. Dadurch entsteht eine relativ unregelmäßige Struktur, die sowohl bezüglich ihrer Breite als auch bezüglich ihrer Oberfläche eine Stapelung mehrerer solcher zusammengefalteter Ständerelemente schwierig macht. Darüber hinaus werden die Scharnierbänder in dieser Position einer Knickbelastung unterzogen.

Es besteht deshalb die Aufgabe, ein Ständerelement der gattungsgemäßen Art zu schaffen, welches die Vorteile einer Säulenform mit mehreckigem Querschnitt für eine gute Platzausnutzung beibehält, bei der Lagerung und dem Transport aber eine flache Stapelung erlaubt und trotzdem schnell und einfach aufgebaut werden kann.

Die Lösung dieser Aufgabe wird bei einem derartigen Ständerelement mit den Mitteln des kennzeichnenden Teiles des Patentanspruches 1 erreicht.

Es ergibt sich dadurch ein Ständerelement, welches bei guter Standfestigkeit seine volle Funktion erfüllen kann, bei der Lagerung und dem Transport aber nach Entfernen eines Wandteiles ein Zusammenklappen der übrigen Wandteile und somit eine flache und flach stapelbare Position ermöglicht. Diesem flachen Stapel kann ein lösbares Wandteil einfach hinzugefügt werden. Auch das Aufstellen dieses Ständerelementes geht schnell, weil zwei seiner Wandteile nur einfach auseinandergeklappt werden müssen, wonach das dritte oder weitere Wandelement einzufügen ist. Dabei kann das Ständerelement je nach Anzahl der Wandteile auch einen viereckigen Querschnitt, insbesondere aber einen dreieckigen Querschnitt haben.

Durch die Anordnung der Scharniere an den Innenseiten der Wandteile nahe deren Rändern können die eigentlichen Wandteile in günstiger Weise aus Platten-Material gefertigt sein und dennoch ergibt sich eine gute Befestigung der Scharniere. Die außenseitigen Anschläge ergeben in Gebrauchsstellung ein sehr stabiles Ständerelement, weil dann alle Scharniere gegen ihre Anschläge geöffnet sind und eine gegenseitige ungewollte Verschwenkung der einzelnen Wandteile ausgeschlossen ist. Besonders zweckmäßig ist es, wenn alle zum Verbinden seiner Wandteile vorgesehenen Scharniere aus lösbar miteinander verbundenen Teilen bestehen, vorzugsweise verrastbar miteinander sind. Der Benutzer hat dann die freie Wahl, welches Wandteil er von den übrigen löst, während er die übrigen Wandteile verbunden läßt und zusammenklappt.

Er kann aber sogar alle Wandteile voneinander lösen und für die Montage wieder zusammenfügen und aufklappen. Die Vereinfachung bei der Herstellung liegt darin, daß dabei alle an den Wandelementen befindlichen Beschläge einander entsprechend gleich sein können, nämlich Scharniere bzw. Scharnierteile sind und nicht einerseits Scharniere und andererseits andere lösbare Befestigungselemente vorgesehen werden müssen. Somit könne auch praktisch alle in einem Vorrat vorhandenen Wandteile beliebig untereinander kombiniert werden. Entsprechend einfach ist auch die Ersatzteilbeschaffung bzw. bei Beschädigung von Ständerelementen können deren restliche Teile wiederum untereinander zu neuen Ständerelementen kombiniert werden, wenn nämlich alle zum Verbinden seiner Wandteile vorgesehenen Scharniere aus lösbar miteinander verbundenen Teilen bestehen, vzw. verrastbar miteinander sind.

Eine weitere Ausgestaltung der Ständerelemente aufgrund der Randprofile kann darin bestehen, daß diese Randprofile die Wandteile an deren Außenseite oder Oberfläche fortsetzen und in diesem Fortsetzungsbereich Nuten, insbesondere Hinterschneidungen aufweisende Nuten, Lochungen od.dgl. Befestigungsstellen zum Anbringen von Ausstellungsgegenständen, Konsolen, Haltern od.dgl. oder zum Einschieben von Stellwänden haben. Somit erhalten diese Randprofile eine Doppelfunktion, indem sie einerseits zur Befestigung der Scharniere dienen und andererseits die Befestigungsstellen für Ausstellungsgegenstände oder Hilfsmittel dafür haben können.

Die Scharnierteile können an der Innenseite der Randprofile in dort vorgesehene Nuten eingreifen, eingeklemmt, verklebt und/oder verschraubt sein. Dabei ergibt sich eine besonders solide Ausbildung, wenn die Randprofile aus Metall und die Scharnierteile aus etwas nachgiebigem Kunststoff bestehen, was der Verrastbarkeit der Scharnierteile entgegenkommt.

Ausgestaltungen der Scharnierteile, insbesondere ihre Lösbarkeit und Verrastbarkeit ermöglichende Ausgestaltungen sind Gegenstand der Ansprüche 10 und 11.

Eine weitere Ausgestaltung des Scharnierbereiches kann darin bestehen, daß ein die Offenstellung der auseinander schwenkbaren Wandteile fixierende Abstandhalter insbesondere lösbar zwischen den Innenseiten der Wandteile vorzugsweise nahe dem Scharnier befestigt ist. Ein zusätzlicher Vorteil eines solchen Abstandhalters besteht dann darin, daß er auch das Scharnier verdeckt und eventuell sogar noch mit Befestigungsstellen oder Halteöffnungen für Konsolen od.dgl. versehen sein kann, um zwischen zwei aufgeklappten Wandteilen in dem so gebildeten Winkelraum Ausstellungsgegenstände aufnehmen zu können.

Eine einfache Realisierung eines solchen Scharnier-nahen Abstandhalters ergibt sich, wenn die an den Wandteilen vorgesehenen Randprofile innenseitig an dem dem Außenrand des Profiles abgewandten Innenrand neben dem Scharnier bei aufgeklappten Wandteilen gegeneinandergerichtete Nuten haben, in die ein Abstandhaltersteg od.dgl. einsetzbar oder einschiebbar ist.

Eine weitere Funktion der Randprofile läßt sich erreichen, wenn an den äußeren Rändern der Randprofile etwa in Verlängerung der Oberfläche der Wandteile von diesen abstehende Stege vorgesehen sind, die eine Krümmung oder Abwinkelung von der Oberfläche in Richtung zur Innenseite hin aufweisen und wenn die Länge dieser Stege so bemessen ist, daß bei vollständig auseinandergeklappten, also dann in einem spitzen, rechten oder eventuell auch stumpfen Winkel zueinanderstehenden Wandteilen zwischen den einander unmittelbar benachbarten gekrümmten oder abgewinkelten Randstegen ein Zwischenraum freibleibt. Dieser kann dann nämlich wiederum zum Einfügen einer Zwischenwand oder auch sonstiger zu haltender Teile dienen.

Insgesamt ergibt sich ein vielseitig einsetzbares Ständerelement, welches durch innenseitige Scharniere zwischen seinen einzelnen Wandteilen schnell und einfach aufgestellt und dabei auch variiert werden kann und je nach Ausbildung der diese Scharniere vorzugsweise haltenden Randprofile zusätzliche Halte- und Ausstellungsmöglichkeiten schafft. Dennoch kann das Ständerelement bei Lagerung und Transport zu flachen Stapeln zusammengelegt und -geklappt werden.

Nachstehend ist die Erfindung mit ihren wesentlichen Merkmalen anhand der Zeichnung noch näher beschrieben. Es zeigt:
- Fig. 1: eine Ansicht mehrerer säulenförmiger Ständerelemente mit dreieckförmigem Querschnitt, von denen einzelne durch Zwischenwände verbunden sind, wobei aber auch ein einzelnes Ständerelement - in diesem Falle mit geringerer Höhe - dargestellt ist,
- Fig. 2: einen Teilquerschnitt durch einen Winkelbereich eines Ständerelementes mit dort eingefügter Zwischenwand, wobei die beiden Wandungen des Ständerelementes durch ein Scharnier verbunden sind,
- Fig. 3: einen Querschnitt eines Ständerelementes mit drei Wandungen, deren zwei mittels eines sie verbindenden Scharnieres auseinandergeklappt sind und deren drittes mit verrastbaren Scharnierteilen an den anderen Rändern der Wandteile lösbar anbringbar ist, kurz vor der endgültigen Montage,
- Fig. 4: eine schaubildliche Ansicht eines Scharnierteiles mit der Scharnierachse, zu welchem eine zwischen die Achslager passende, teilweise offene Scharnierhülse paßt,
- Fig. 5: zwei mittels eines sie verbindenden Scharnieres mit ihren Innenseiten gegeneinandergeklappte Wandungen für die Lager- und Transportposition,
- Fig. 6: in schematisierter Darstellung einen ein gleichseitiges Dreieck bildenden Querschnitt eines Ständerelementes,
- Fig. 7: ein abgewandeltes Ständerelement mit viereckigem und dabei trapezförmigem Querschnitt, bei welchem an den vier Ecken unterschiedliche Öffnungs-Schwenkwinkel vorgesehen sind, sowie
- Fig. 8: einen rechteckigen Querschnitt eines Ständerelementes mit vier Wandungsteilen, die jeweils in Gebrauchsstellung rechte Winkel miteinander bilden.

Ein in den verschiedenen Ausführungsbeispielen jeweils im ganzen mit 1 bezeichnetes etwa säulenförmiges Ständerelement kann in unterschiedlichen Weisen dazu dienen, in Ausstellungsräumen, Messeständen od.dgl. vorhandenen Platz besser auszunutzen, indem es an entsprechenden freien Stellen aufgestellt oder gegebenenfalls auch verankert werden kann und noch zu beschreibende Befestigungsstellen für auszustellende Gegenstände, Abbildungen od.dgl. hat. Bei nicht all zu großer Höhe kann dabei sogar seine Oberseite 2 zum Auflegen oder Aufstellen von Gegenständen dienen.

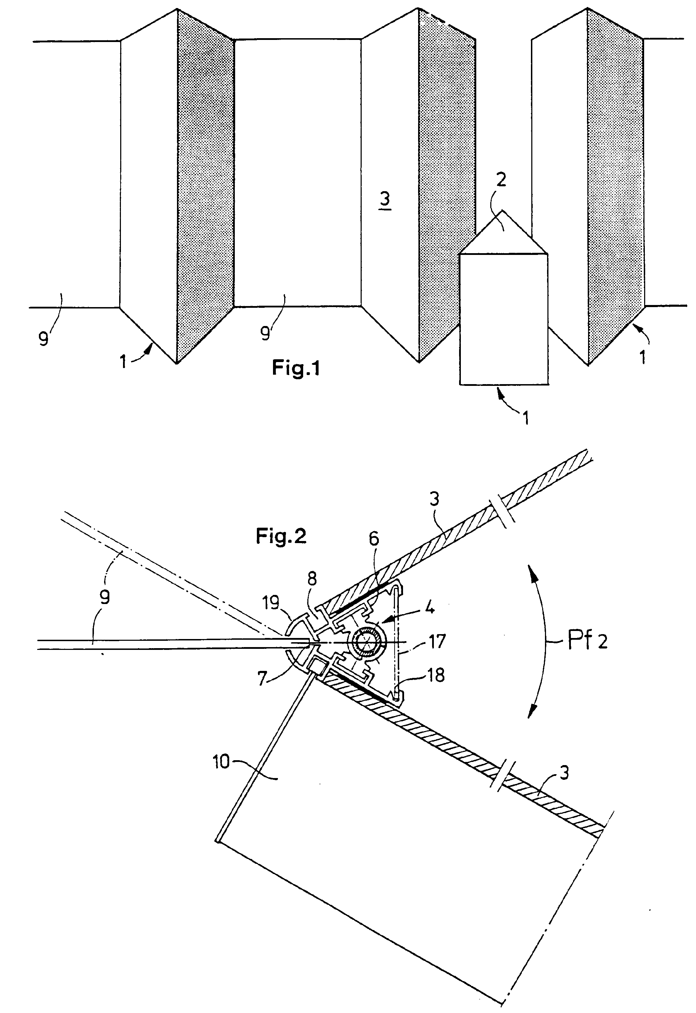

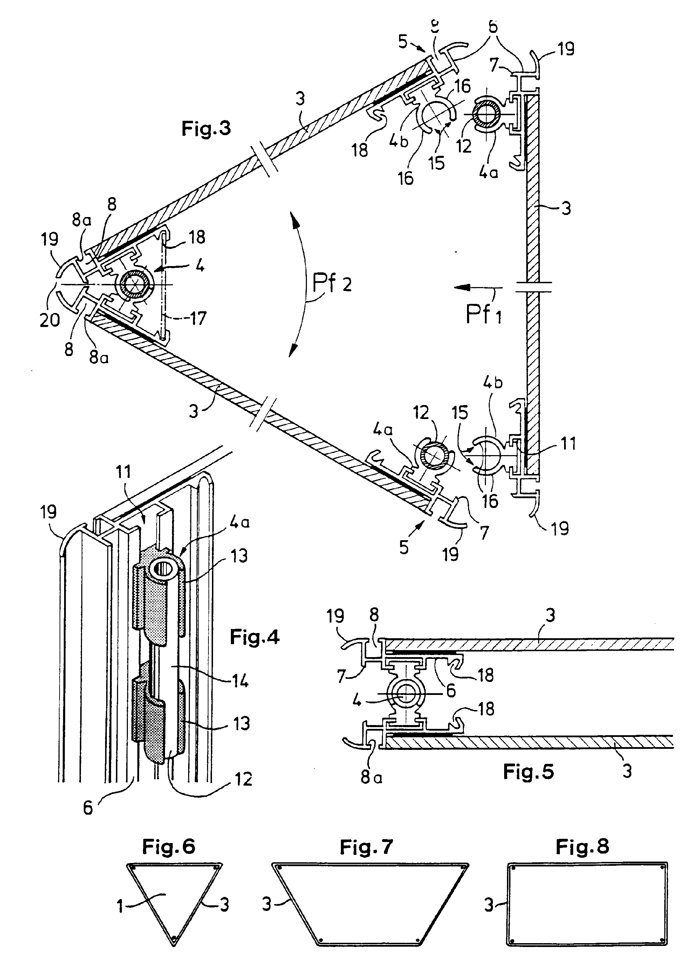

Gemäß den Figuren 1, 3 u.6 kann das Ständerelement wenigstens drei, gemäß den Figuren 7 u.8 sogar vier, natürlich auch noch mehr etwa vertikale Oberflächen haben, die an im Winkel zueinanderstehenden Wandteilen 3 vorgesehen sind und die schon erwähnten Befestigungsstellen haben.

Gemäß Fig.2 bis 5 ist zwischen wenigstens zwei der Wandteile 3 ein im ganzen mit 4 bezeichnetes Scharnier vorgesehen, welches aber auch durch eine sonstige Schwenkverbindung zwischen diesen beiden Wandteilen 3 ersetzt sein könnte. Die beiden an diesem Scharnier 4 befestigten Wandteile 3 sind gemäß Fig.5 mit ihren den Oberflächen abgewandten Innenseiten gegeneinanderklappbar, können also bei Nichtgebrauch in eine sehr platzsparende und gut stapelbare Position gebracht werden.

In Fig.3 ist angedeutet, daß außerdem zumindest ein drittes Wandteil 3 bei aufgeklappter Position lösbar zwischen den freien Rändern 5 der durch das Scharnier 4 verbundenen Wandteile 3 befestigt werden kann, was bei den schematisiert dargestellten, einen dreieckförmigen Querschnitt aufweisenden Ständerelementen 1 gemäß Fig.1 der Fall ist. In Fig.3 befindet sich dieses dritte Wandteil 3 vor seiner Montage, die durch den Pfeil Pf 1 angedeutet ist.

Gemäß den Figuren 7 u.8 kann das Ständerelement 1 einen viereckigen Querschnitt haben, demgemäß vier Wandteile 3 aufweisen und dabei können dann jeweils wenigstens zwei dieser Wandteile 3 analog der Anordnung der Figur 2 durch ein Scharnier 4 verbunden sein, wobei dann die freien Ränder 5 dieser durch ein Scharnier 4 verbundenen Wandteile jeweils wiederum miteinander lösbar zu dem viereckigen Gesamtquerschnitt verbindbar sind. Auch in diesem Falle können also dann nach dem Lösen dieser Verbindung der freien Ränder 5 die durch das Scharnier 4 verbundenen Wandteile 3 jeweils in die in Fig.5 dargestellte platzsparende Lager- und Transportposition geklappt werden. Ein viereckiges Ständerelement ergibt sich also, wenn statt des zusätzlichen, gemäß dem Pfeil Pf 1 einzufügenden Wandteiles 3 der Fig.3 eine weitere aus zwei Wandteilen 3 und einem Verbindungsscharnier 4 bestehende Einheit eingesetzt wird.

Im Ausführungbeispiel sind in vorteilhafter Weise die Verbindungsmittel zwischen den freien Rändern 5 der Wandteile 3 ebenfalls Scharniere 4, deren gegeneinander schwenkbare Teile 4a und 4b lösbar miteinander verbunden werden können und dabei im Ausführungsbeispiel in noch zu beschreibender Weise verrastbar sind. Somit ergibt sich nach dem Verbinden auch an den freien Rändern 5 eine Scharnierverbindung und wenn das schon erwähnte Scharnier 4 ebenfalls aus trennbaren Scharnierteilen 4a und 4b besteht, kann wahlweise das Ständerelement 1 in einzelne Wandteile 3 zerlegt werden oder aber es können auch beliebige Wandteile 3 entfernt und die verbleibenden zusammengeklappt werden. Es ergibt sich in jedem Falle ein vielseitig verwendbares und gut zu handhabendes, in all diesen Fällen platzsparend lagerbares Ständerelement 1.

In den Ausführungsbeispielen ist tatsächlich vorgesehen, daß alle zum Verbinden der Wandteile 3 vorgesehenen Scharniere 4 aus lösbar miteinander verbundenen Teilen 4a und 4b bestehen und miteinander verrastbar sind, also auch wieder gut durch Ausrasten der Rastverbindung getrennt werden können.

In den Figuren 2 bis 5 ist verdeutlicht, daß die Scharniere 4 bzw. die Scharnierteile 4a und 4b an den Innenseiten der Wandteile 3 nahe deren Rändern 5 angeordnet und dabei die Scharnierteile 4a und 4b jeweils an mit den Wandteilen 3 verbundenen Randprofilen 6 befestigt sind. Somit können die Wandteile 3 aus einem beliebigen günstigen Werkstoff bestehen und dennoch sind gute Befestigungsmöglichkeiten für die Scharnierteile 4a und 4b sowie auch eine einfache Berücksichtigung der noch zu erwähnenden Befestigungsstellen möglich.

In Fig.2 und 3 ist strichpunktiert angedeutet, daß die Scharniere 4 oder die sie aufnehmenden Randprofile 6 der Wandteile 3 außenseitige Anschläge 7 zur Begrenzung des durch den Doppelpfeil Pf 2 in Fig.2 u.3 angedeuteten Öffnungs-Schwenkweges der Scharnierteile 4 und damit auch der Wandteile 3 haben. Diese Anschläge 7 sind dabei als Stegverlängerungen der Randprofile 6 ausgebildet. Die Querschnittslänge dieser Anschläge 7 bestimmt den Öffnungs-Schwenkweg oder Öffnungswinkel, der wiederum davon abhängt, welchen Gesamtquerschnitt das Ständerelement 1 haben soll. In den Figuren 2 u.3 ist der Winkel zwischen den durch die Scharniere 4 verbundenen Wandteilen 3 auf 60° begrenzt, weil es sich dabei um ein Ständerelement mit dem Querschnitt eines gleichseitigen Dreiecks gemäß Fig.6 handelt.

Bei einem Ständerelement mit rechten Winkeln gemäß Fig. 8 müßte eine entsprechend andere Anordnung getroffen werden, während bei der Lösung nach Fig .7 neben zwei spitzen Winkeln sogar zwei stumpfe Winkel auftreten können.

Die Randprofile 6 setzen im Ausführungsbeispiel die Wandteile 3 an deren Außenseite oder Oberfläche fort und haben in diesem Fortsetzungsbereich Nuten 8, die sich praktisch rechtwinklig zur Oberfläche der Wandteile 3 nach innen erstrecken und im Ausführungsbeispiel Hinterschneidungen 8a aufweisen. Es könnten auch Lochungen oder Schlitze oder sonstige Befestigungsstellen vorgesehen sein, die zum Anbringen von Ausstellungsgegenständen oder Haltern, Konsolen od.dgl. dafür dienen oder aber auch zum Einschieben von Stellwänden 9 (Fig.1) dienen können, wobei in Fig.1 die Stellwände 9 in einer noch zu beschreibenden Weise jedoch an einer anderen Öffnung des Ständerelementes angeschlossen sind. In Fig.2 erkennt man die Befestigung eine Tablars 10 an einer Nut 8.

Die Scharnierteile 4a und 4b sind an der Innenseite der Randprofile 6 in dort vorgesehenen Nuten 11 befestigt, in welche sie eingreifen und worin sie eingeklemmt, verklebt und/oder verschraubt sind. Dabei können die Randprofile 6 in vorteilhafter Weise aus stabilem Metall bestehen, während die Scharnierteile 4a und 4b und dabei vor allem das zu verrastende Scharnierteil 4b aus etwas nachgiebigem Kunststoff bestehen können.

Das eine Scharnierteil 4a weist gemäß Fig.4 eine Schwenkachse 12 auf, die einen gegenüber ihrer Halterung 13 beabstandeten Lagerbereich 14 hat. Das dazu passende andere Scharnierteil 4b erkennt man beispielsweise in Fig.3 an dem oben liegenden freien Rand des einen Wandteiles oder an dem unteren Rand des noch zu verrastenden Wandteiles 3 und dieses Scharnierteil 4b ist als im Querschnitt bogenförmiges, nach einer Seite offenes Hülsenstück ausgebildet, dessen über die gesamte Länge reichende schlitzförmige Öffnung 15 kleiner als der Durchmesser des Achsenstückes 12 des ersten Scharnierteiles 4a ist, dessen Innenquerschnitt aber etwa dem Außenquerschnitt des Achsenstückes 12 entspricht und dessen Schenkel 16 mindestens bis auf das Maß des Durchmessers des Achsenstückes bzw. der Schwenkachse 12 auseinanderbiegbar sind, so daß es einfach auf die Schwenkachse 12 aufgedrückt und dadurch zunächst aufgeweitet werden kann, bis es die Schwenkachse 12 durch die Rückfederung seiner Schenkel 16 formschlüssig aber schwenkbar umgreift.

Das Achsenstück 12 ist an seinen beiden Enden gelagert und der Abstand der beiden Halterungen oder Lager 13 ist gleich oder größer der Länge des damit verrastbaren Hülsenteiles, welches in seiner Höhe passend zu diesem frei liegenden Achsenteil angeordnet ist.

Zwar wäre auch ein Scharnier denkbar, bei welchem die zu den beiden Scharnierteilen jeweils gehörenden Hülsen übereinander anzuordnen und dann durch einen Steckstift zu verbinden wären, jedoch würde dies den Verbindungs- und Löse-Aufwand vergrößern und erforderlich machen, daß die Scharniere 4 an von außen zugänglichen Stellen des Ständerelementes 1 angeordnet sind. Die Verrastbarkeit hat demgegenüber den Vorteil, daß die Scharniere an beliebigen, für die Übertragung der erforderlichen Kräfte günstigen Stellen innerhalb des Ständerelemente angeordnet sein können und das Verbinden und Lösen schneller durchgeführt werden kann.

In den Figuren 2 u.3 ist strichpunktiert angeordnet, daß ein die Offenstellung der auseinanderschwenkbaren Wandteile 3 fixierender Abstandhalte 17 insbesondere lösbar zwischen den Innenseiten der Wandteile 3 vorzugsweise jeweils nahe dem Scharnier 4 insbesondere lösbar befestigt sein kann, so daß ein ungewolltes Zusammenklappen der Wandteile verhindert werden kann, wenn diese beispielsweise nicht zu einem geschlossenen Ständerelement ergänzt werden, sondern das Ständerelement an einer Seite offen bleibt) weil beispielsweise innerhalb seines Winkelraumes durch dort angeordnete Fächer, Halterungen od.dgl. ebenfalls Gegenstände ausgestellt werden sollen. Dabei hat dann dieser Abstandhalter 17 noch den Vorteil, das Scharnier 4 zu verdecken und seinerseits Befestigungsstellen wie z.B. Halteöffnungen für Konsohlen od.dgl. aufweisen kann.

Die an den Wandteilen 3 vorgesehenen Randprofile 6 haben dabei innenseitig an dem dem Außenrand des Profiles 6 abgewandten Innenrand neben dem Scharnier 4 bei aufgeklappten Wandteilen 3 gegeneinandergerichtete Nuten 18, in die ein solcher Abstandhaltersteg 17 od.dgl. einsetzbar oder einschiebbar ist.

Die Randprofile 6 erlauben eine weitere vorteilhafte Ausbildung dahingehend, daß an ihren äußeren Rändern etwa in Verlängerung der Oberfläche der Wandteile 3 von diesen abstehende Stege 19 vorgesehen sind, die eine Krümmung oder Abwinkelung von der Oberfläche in Richtung zur Innenseite hin aufweisen. Die Länge dieser Stege 19 ist gemäß Fig.2 u.3 so bemessen, daß bei vollständig auseinandergeklappten Wandteilen 3 zwischen den einander unmittelbar benachbarten gekrümmten Randstegen 19 ein Zwischenraum 20 freibleibt, der nun gemäß Fig.2 den Rand der Zwischenwand 9 in sich aufnehmen kann. Zwar könnte eine solche Zwischenwand 9 auch in eine der Nuten 8 eingesetzt werden, wodurch sich jedoch eine andere Orientierung relativ zu den Oberflächen der Wandteile 3 ergäbe. Durch den Zwischenraum 20 wird also die Vielseitigkeit der Verwendung des Ständerelementes 3 weiter vergrößert. Dabei ist strichpunktiert angedeutet, daß der sich zwischen den Randstegen 19 und den Anschlägen 7 befindliche Freiraum dazu eignet, die Zwischenwand 9 in unterschiedliche Winkelpositionen relativ zu dem Ständerelement 1 und seinen Wandteilen 3 zu bringen. Neben der in Fig.2 mit durchgezogenen Linien angedeuteten Anordnung auf einer Verlängerung der Winkelhalbierenden, ist also auch eine Anordnung etwa in Flucht mit einer der Wandteile 3 möglich, was der Anordnung gemäß Fig. 1 entspricht.

Es sei noch erwähnt, daß wenigstens eines der Wandteile 3 aus durchsichtigem Werkstoff bestehen kann, so daß dann das Ständerelement 1 sogar die Funktion einer Vitrine erhalten kann insbesondere dann, wenn in seinem Inneren Befestigungsstellen für Fachböden, Konsolen od.dgl. vorgesehen sind, wie es schon im Zusammenhang mit dem das Scharnier 4 verdeckenden Abstandhalter 17 erwähnt wurde.

Das Ständerelement 1 dient vor allem zur besseren Ausnutzung des Platzangebotes in Ausstellungsräumen, auf Messeständen od.dgl. und hat wenigstens drei etwa vertikale Oberflächen, die an im Winkel zueinanderstehenden Wandteilen 3 vorgesehen sind und mit Befestigungsstellen für auszustellende Gegenstände, Abbildungen od.dgl. versehen sind. Zwischen wenigstens zwei der Wandteile 3 ist ein Scharnier 4 od.dgl. Schwenkverbindung vorgesehen, so daß diese beiden Wandteiie 3 für eine platzsparende Lagerung mit ihren ihren Oberflächen abgewandten Innenseiten gegeneinandergeklappt werden können. Zumindest ein drittes Wandteil 3 kann bei aufgeklappter Position lösbar zwischen den freien Rändern 5 der durch das Scharnier 4 verbundenen Wandteilen 3 befestigt werden und so das Ständerelement 1 stabilisieren. Wenn dabei die Befestigungsmittel auch für dieses zusätzliche Wandteil 3 ebenfalls Scharniere 4 sind, deren Teile wie die des erstgenannten Scharnieres 4 lösbar miteinander verbunden werden können, ergibt sich insgesamt ein Ständerelement, bei welchem alle Wandteile 3 von baugleichen Scharnierteilen 4a und 4b zusammengehalten werden, so daß der Benutzer wählen kann, welche der Wandteile 3 er löst und welche er zusammenklappt oder ob er gar alle Wandteile 3 für die Lagerung und den Transport löst.

## Patentansprüche

1. Ständerelement (1) insbesondere für Ausstellungs-, Messestände oder dergleichen, mit wenigstens drei Oberflächen, die an im Winkel zueinander stehenden Wandteilen (3) des Ständerelementes vorgesehen sind, und mit Befestigungsstellen für auszustellende Gegenstände, Abbildungen oder dergleichen, wobei zwischen den Wandteilen (3) jeweils Scharniere (4) oder dergleichen Schwenkverbindungen vorgesehen sind und die daran befestigten Wandteile gegeneinander klappbar sind und zumindest ein Wandteil lösbar zwischen den freien Rändern (5) der durch Scharniere (4) oder dergleichen verbundenen Wandteile (3) befestigt ist, **dadurch gekennzeichnet**, daß die Scharniere (4) an den Innenseiten der Wandteile (3) nahe deren Rändern (5) angeordnet sind, daß die Scharniere (4) und/oder sie aufnehmende Randprofile (6) der Wandteile (3) außenseitige Anschläge (7) zur Begrenzung des Öffnungs-Schwenkweges der Scharnierteile (4a, 4b) haben, und daß die gegeneinander schwenkbaren Teile (4a, 4b) der Scharniere (4) lösbar miteinander verbunden, vorzugsweise verrastet sind.

2. Ständerelement nach Ansprüch 1, dadurch gekennzeichnet, daß alle zum Verbinden seiner Wandteile (3) vorgesehenen Scharniere (4) aus lösbar miteinander verbundenen Teilen (4a,4b) bestehen, vorzugsweise verrastbar miteinander sind.

3. Ständerelement nach Ansprüch 1 oder 2, dadurch gekennzeichnet, daß die Randprofile (6) die Wandteile (3) an deren Außenseite oder Oberflächen fortsetzen und in diesem Fortsetzungsbereich Nuten (8), insbesondere Befestigungsstellen zum Anbringen von Ausstellungsgegenständen, Konsolen, Haltern od.dgl. oder zum Einschieben von Stellwänden (9) haben.

4. Ständerelement nach einem der Ansprüche 1 bis 3, dadurch gekennzeichnet, daß die Scharnierteile (4a, 4b) an der Innenseite der Randprofile (6) in dort vorgesehene Nuten (11) eingreifen, eingeklemmt, verklebt und/oder verschraubt sind.

5. Ständerelement nach einem der Ansprüche 1 bis 4, dadurch gekennzeichnet, daß die Randprofile (6) aus Metall und die Scharnierteile (4a, 4b) aus etwas nachgiebigem Kunststoff bestehen.

6. Ständerelement nach einem der Ansprüche 1 bis 5, dadurch gekennzeichnet, daß ein Scharnierteil (4a) eine Schwenkachse (12) aufweist, die einen gegenüber ihrer Halterung (13) beabstandeten Lagerbereich (14) hat, und daß das dazu passende Scharnierteil (4b) als im Querschnitt bogenförmiges, nach einer Seite offenes Hülsenstück ausgebildet ist, dessen Öffnung (15) kleiner als der Durchmesser des Achsenstückes (12) ist, dessen Innenquerschnitt aber dem Außenquerschnitt des Achsenstückes (12) etwa entspricht und dessen Schenkel (16) mindestens bis auf das Maß des Durchmessers des Achsenstückes (12) auseinanderbiegbar sind.

7. Ständerelement nach einem der Ansprüche 1 bis 6, dadurch gekennzeichnet, daß das Achsenstück (12) an seinen beiden Enden gelagert ist und der Abstand der beiden Halterungen oder Lager (13) gleich oder größer der Länge des damit verrastbaren Hülsenteiles ist.

8. Ständerelement nach einem der Ansprüche 1 bis 7, dadurch gekennzeichnet, daß ein die Offenstellung der auseinanderschwenkbaren Wandteile (3) fixierender Abstandhalter (17) insbesondere lösbar zwischen den Innenseiten der Wandteile vorzugsweise nahe dem Scharnier (4), insbesondere lösbar befestigt ist.

9. Ständerelement nach einem der Ansprüche 1 bis 8, dadurch gekennzeichnet, daß die an den Wandteilen (3) vorgesehenen Randprofile (6) innenseitig an dem dem Außenrand des Profiles (6) abgewandten Innenrand neben dem Scharnier (4) bei aufgeklappten Wandteilen (3) gegeneinandergerichtete Nuten (18) haben, in die ein Abstandhaltersteg (17) od.dgl. einsetzbar oder einschiebbar ist.

10. Ständerelement nach einem der Ansprüche 1 bis 9 , dadurch gekennzeichnet, daß an den äußeren Rändern der Randprofile etwa in Verlängerung der Oberfläche der Wandteile (3) von diesen abstehende Stege (19) vorgesehen sind, die eine Krümmung oder Abwinkelung von der Oberfläche in Richtung zur Innenseite hin aufweisen und daß die Länge dieser Stege (19) so bemessen ist, daß bei vollständig auseinandergeklappten Wandteilen (3) zwischen den einander unmittelbar benachbarten gekrümmten Randstegen (19) ein Zwischenraum (20) freibleibt.

11. Ständerelement nach einem der vorstehenden Ansprüche, dadurch gekennzeichnet, daß wenigstens eines der Wandteile (3), vorzugsweise das für die Lagerung und den Transport lösbare Wandteil (3), aus durchsichtigem Werkstoff besteht.

## Claims

1. A support element (1) especially for display, fair stands or the like, having at least three surfaces provided on wall members (3) of the support element, said wall members being in angular relationship to one another, and further including locations for affixing exhibits, illustrations or the like, hinges (4) or like swivel joints being provided in each case between the wall members (3) and the wall members affixed thereto being adapted to fold together, at least one wall member being releasably fitted between the free edges (5) of the wall members (3) connected by hinges (4) or the like, characterized in that the hinges (4) are arranged at the insides of the wall members (3) near the edges (5) thereof, that the hinges (4) and/or sections (6) skirting the wall members (3) and accommodating said hinges have external stops (7) to limit the opening path of swing of the hinge portions (4a, 4b) and that the hinge (4) portions (4a, 4b) adapted to swivel relative to each other are releasably interconnected, preferably interlocked.

2. A support element as claimed in claim 1, characterized in that all the hinges (4) provided for joining its wall members (3) consist of releasably interconnected portions (4a, 4b), preferably are interlockable.

3. A support element as claimed in claim 1 or claim 2, characterized in that the sections (6) skirting the wall members (3) extend the same at the outside or surfaces thereof and in said extension zone have channels (8), especially locations for affixing exhibits, brackets, holders or the like or for inserting partitions (9).

4. A support element as claimed in any one of claims 1 to 3, characterized in that the hinge portions (4a, 4b) at the inside of the skirting sections (6) engage with channels (11) provided there and are wedged therein, secured therein by adhesive and/or screws.

5. A support element as claimed in any one of claims 1 to 4, characterized in that the skirting sections (6) consist of metal and the hinge portions (4a, 4b) consist of slightly resilient plastics material.

6. A support element as claimed in any one of claims 1 to 5, characterized in that one hinge portion (4a) has a swivel pin (12) having spaced from its mounting (13) a bearing area (14), and that the companion hinge portion (4b) takes the form of a sleeve member which is arcuate in cross section and is open on one side, the opening (15) of said sleeve member being smaller than the diameter of the pin member (12) but the inside cross section of said sleeve member approximating the outside cross section of the pin member (12) and the limbs (16) of said sleeve member being adapted to bend apart at least to the diametral size of the pin member (12).

7. A support element as claimed in any one of claims 1 to 6, characterized in that the pin member (12) is mounted at the two ends thereof and the spacing of the two mounts or bearings (13) is equal to or greater than the length of the sleeve portion interlockable therewith.

8. A support element as claimed in any one of claims 1 to 7, characterized in that a spacer (17) attached between the inside of the wall members, particularly near the hinge (4), fixes the open position of the wall members (3) which are adapted to swing apart, said spacer being attached particularly in a releasable manner.

9. A support element as claimed in any one of claims 1 to 8, characterized in that the sections (6) skirting the wall members (3) have internally, at the inner edge averted from the outer edge of the section (6), along-side of hinge (4), channels (18) which are directed towards each other when the wall members (3) are folded out and into which a spacer web (17) or the like is adapted to be inserted or slid.

10. A support element as claimed in any one of claims 1 to 9, characterized in that provided at and projecting from the outer edges of the skirting sections there are webs (19) which are more or less in extension of the surface of the wall members (3) and have a curvature or angle shape from the surface towards the interior, the length of said webs (19) being dimensioned such that when the wall members (3) are folded fully apart a space (20) remains free between the bent webs (19) directly adjacent to each other.

11. A support element as claimed in any one of the preceding claims, characterized in that at least one of the wall members (3), preferably the wall member (3) detachable for storage and transport, consists of transparent material.

## Revendications

1. Élément de support (1), notamment pour stands d'exposition, de foire ou similaires, comprenant au moins trois surfaces prévues sur les pans (3) de l'élément de support disposés en angle les uns par rapport aux autres et comportant des points de fixation pour exposer des objets, des illustrations ou similaires, des charnières (4) ou des éléments de liaison pivotants étant chaque fois prévus entre les pans (3), les pans qui y sont fixés pouvant être rabattus l'un vers l'autre et au moins un pan étant fixé de manière amovible entre les bords (5) libres des pans (3) reliés par des charnières (4) ou analogues, caractérisé en ce que les charnières (4) sont disposées sur les faces internes des pans (3), à proximité des bords (5) de ces pans, en ce que les charnières (4) et / ou les profilés marginaux (6) des pans (3) portant ces charnières présentent des arrêts (7) extérieurs pour limiter le déplacement pivotant d'ouverture des parties de charnières (4a, 4b), et en ce que les éléments (4a, 4b) de charnières (4) pouvant pivoter l'un vers l'autre sont assemblés de façon amovible, de préférence encastrés les uns dans les autres.

2. Élément de support selon la revendication 1, caractérisé en ce que toutes les charnières (4) prévues pour assembler les pans (3) de cet élément se composent d'éléments (4a, 4b) assemblés de manière amovible, de préférence pouvant être encastrés les uns dans les autres.

3. Élément de support selon la revendication 1 ou 2, caractérisé en ce que les profilés marginaux (6) prolongent les pans (3) au niveau de leur face externe ou de leurs surfaces et sont dotés, dans ce prolongement, de rainures (8), notamment de points de fixation, pour y accrocher des objets à exposer, des consoles, des supports ou similaires, ou pour y glisser des panneaux (9).

4. Élément de support selon l'une des revendications 1 à 3, caractérisé en ce que les éléments de charnière (4a, 4b) sont logés, coincés, collés et/ou vissés dans des rainures (11) prévues sur la face interne des profilés marginaux (6).

5. Élément de support selon l'une des revendications 1 à 4, caractérisé en ce que les profilés marginaux (6) sont en métal et les éléments de charnière (4a, 4b) en matière plastique légèrement élastique.

6. Élément de support selon l'une des revendications 1 à 5, caractérisé en ce qu'un élément de charnière (4a) présente un axe pivotant (12) muni d'un palier (14) distant par rapport à sa bride de support (13), et en ce que l'élément de charnière (4b) associé est réalisé sous forme de manchon de section en forme d'arc, ouvert d'un côté dont l'ouverture (15) est plus petite que le diamètre de l'axe (12), mais dont la section intérieure correspond approximativement à la section extérieure de l'axe (12), et dont le bras (16) peut être écarté au moins jusqu'à atteindre la dimension du diamètre de l'axe (12).

7. Élément de support selon l'une des revendications 1 à 6, caractérisé en ce que l'axe (12) est maintenu à ses deux extrémités, et en ce que l'écart entre les deux brides de support ou logements (13) est égal ou supérieur à la longueur du manchon pouvant y être encastré.

8. Élément de support selon l'une des revendications 1 à 7, caractérisé en ce qu'un écarteur (17) maintenant les pans (3) séparables par pivotement en position ouverte est fixé notamment de façon amovible entre les faces internes des pans, de préférence à proximité de la charnière (4).

9. Élément de support selon l'une des revendications 1 à 8, caractérisé en ce que les profilés marginaux (6) prévus sur les pans (3) sont dotés de rainures (18) orientées l'une vers l'autre et situées sur la face interne du bord intérieur opposé au bord extérieur du profilé (6), à côté de la charnière(4) lorsque les pans (3) sont dépliés, dans lesquelles une entretoise (17) ou similaire peut être logée ou coulissée.

10. Élément de support selon l'une des revendications 1 à 9, caractérisé en ce que des ailes (19) sont prévues sur les bords extérieurs des profilés marginaux, approximativement dans le prolongement des surfaces des pans (3) et en relief par rapport à ces surfaces, et présentent une courbure ou un coude partant de la surface et orienté vers la face interne, et en ce que la longueur de ces ailes (19) est dimensionnée de telle manière, que lorsque les pans (3) sont totalement dépliés, il reste un intervalle (20) entre les ailes (19) courbées adjacentes.

11. Élément de support selon l'une des revendications précédentes, caractérisé en ce qu'au moins un des pans (3), de préférence le pan (3) détachable pour le stockage et le transport se compose d'un matériau transparent.
